# EUROPÄISCHE PATENTSCHRIFT

(11) **EP 2 251 457 B1**
(45) Veröffentlichungstag und Bekanntmachung des Hinweises auf die Patenterteilung: **14.12.2016**
(21) Anmeldenummer: 10007167.9
(22) Anmeldetag: 21.05.2003
(51) Int. Cl.: C23C 28/00, C23C 30/00

(54) **NiCoCrAl- oder CoCrAl-Schicht mit Re**
NiCoCrAl- or CoCrAl-coating with Re
Revêtement en NiCoCrAl ou CoCrAl avec Re

(30) Priorität: 24.05.2002 EP 02011461
(43) Veröffentlichungstag der Anmeldung: 17.11.2010
(62) Teilanmeldung aus: 03727493.3
(73) Patentinhaber: Siemens Aktiengesellschaft, 80333 München (DE)
(72) Erfinder: Quadakkers, Dr. Willem,, 6363 EG Wijnandsrade, (NL); Stamm, Dr. Werner,, 45481 Mülheim an der Ruhr, (DE)

(56) Entgegenhaltungen:
- EP-A- 0 532 150
- DE-A1- 2 826 909
- US-A- 6 165 628
- B. RHOUTA UND B. PIERAGGI: "Microstructural characterization of the oxide scale grown at the interface between PSZ top coat and MCrAlY bond coat" MATERIALS SCIENCE FORUM, Bd. 369-372, 15. Januar 2001 (2001-01-15), Seiten 687-694, XP008126976
- LIH W ET AL: "Effects of bond coat preoxidation on the properties of ZrO2-8wt.% Y2O3/Ni-22Cr-10Al01Y thermal-barrier coatings" OXIDATION OF METALS, Bd. 36, Nr. 3-4, Oktober 1991 (1991-10), Seiten 221-238, XP002600963 USA ISSN: 0030-770X

## Beschreibung

Die Erfindung betrifft eine NiCoCrAl- oder CoCrAl-Schicht für hochtemperaturbelastete Bauteile, insbesondere für eine Turbinenschaufel, insbesondere für eine Gasturbine.

Metallische Komponenten, die bei hohen Temperaturen eingesetzt werden, müssen in vielen Bereichen der Technik durch Schichtsysteme gegen den oxidierenden, korrosiven und/oder degradierenden Angriff der Betriebsatmosphäre geschützt werden. Für den Bereich Gasturbinen, d.h. Flugtriebwerke und industrielle stationäre Gasturbinen, ist es seit vielen Jahren Stand der Technik die Hochtemperaturkomponenten gegen die Degradation durch Aufbringen von Schichten vom Typ NiCoCrAl (M= Fe, Co, Ni) oder β-NiAl zu schützen.
Die NiCoCrAl-Schichten werden üblicherweise mittels Vakuum- oder Luftplasmaspritzen auf die metallische Hochtemperaturkomponente aufgebracht. Die β-NiAl-Schichten werden über Alitierverfahren aufgebracht.
Diese Arten von Schutzschichten werden, abhängig von der jeweiligen Komponente und den Betriebsbedingungen, sowohl als reine Oxidations- und Korrosionsschutzschicht als auch in Form von Haftvermittlerschichten für keramische Wärmedämmschichten, beispielsweise auf Zirkonoxidbasis, eingesetzt.

In beiden genannten Anwendungsfällen beruht die Schutzwirkung der Schichtsysteme auf einer Aluminiumoxidschicht, die sich bei den hohen Betriebstemperaturen auf diesen Schichten bildet. Zum Erzielen einer geringen Wachstumsrate und einer guten Haftung der Aluminiumoxidschicht enthalten die NiCoCrAl-und β-NiAl-Schichten üblicherweise geringe Mengen sauerstoffaffiner Elemente, insbesondere Yttrium.
Um die Aluminiumoxidbildung auch während eines Langzeiteinsatzes zu gewährleisten, muss der Aluminiumgehalt in dem Schichtsystem ausreichend hoch sein. Bei β-NiAl-Schichten ist dies üblicherweise etwa 25 - 30wt%, während die NiCoCrAl-Schichten etwa 8 - 14 wt% Aluminium enthalten. Die NiCoCrAl-Schichten haben im Vergleich zu den β-NiAl-Schichten den Vorteil, dass sie weniger spröde sind und außerdem korrosionsbeständiger in schwefelhaltigen Betriebsgasen sind.

Aufgrund von Laboruntersuchungen und Betriebserfahrungen hat sich gezeigt, dass die Langzeiteigenschaften und die Funktion zur Sicherheit der NiCoCrAl-Schichten maßgeblich von der Haftung der thermisch gewachsenen Oxidschicht (TGO) auf Aluminiumoxidbasis, die sich auf den Oberflächen bei den hohen Betriebstemperaturen bildet, bestimmt wird. Dies gilt sowohl beim Einsatz der NiCoCrAl-Schichten zwecks Oxidations-und Korrosionsschutz einer metallischen Komponente, jedoch auch insbesondere im Falle einer Anwendung als Haftvermittlerschicht für keramische Wärmedämmschichten.

Die Probleme mit der Haftung der TGO beruhen vorwiegend auf der Tatsache, dass beim Abkühlen der NiCoCrAl beschichteten Komponente in und in der Nähe der TGO thermisch induzierte Spannungen auftreten, die auf die Unterschiede im thermischen Ausdehnungskoeffizienten zwischen der NiCoCrAl-Schicht und der TGO auf Aluminiumoxidbasis zurückzuführen sind. Wenn während des Langzeiteinsatzes wachstumsbedingte Risse in der Nähe der Grenzfläche zwischen TGO und NiCoCrAl-Schicht entstehen, führen die thermisch induzierten Spannungen zum Abplatzen der TGO.

Beim Einsatz des NiCoCrAl-Werkstoffs als reine Oxidatiöns- und Korrosionsschicht einer metallischen Komponente, führt das regelmäßige Abplatzen der TGO und die darauf folgende Neubildung einer Oxidschicht zu einem beschleunigten Verbrauch des deckschichtbildenden Elements Aluminium und somit zu einer Verkürzung der Lebensdauer der NiCoCrAl- Schicht.

Beim Einsatz der NiCoCrAl-Schicht als Haftvermittlerschicht für keramische Wärmedämmschichten wird ein Abplatzen der TGO unmittelbar ein Abplatzen und damit ein katastrophales Versagen der Wärmedämmschicht bewirken.

Bisher wurde versucht, durch ein Überplatinieren der NiCoCrAl-Schicht mit niedrigen Aluminiumgehalten von etwa 8wt% eine Schichtstruktur mit guter Verzahnung zur Keramik zu erreichen. Dies bedeutet jedoch das Aufbringen einer weiteren Schicht.

Die US-PS 5,741,556 zeigt eine NiCoCrAl-Schicht mit Yttrium, bei der Stickstoff als Inertgas bei der Herstellung der Schicht verwendet wird.

Die US-PS 5,981,091 zeigt eine NiCoCrAl-Schicht, die Hafnium, Yttrium, Kohlenstoff und Stickstoff enthalten kann. Bei diesem Wärmedämmschichtsystem wird jedoch eine mit Platin angereicherte Schicht auf die NiCoCrAl-Schicht aufgebracht.

Die US-PS 4,774,149 offenbart eine NiCoCrAl-Schicht mit Hafnium, Yttrium und einem Stickstoffgehalt im Pulver, der jedoch unerwünscht ist und auf ein Minimum reduziert werden soll.

Die US-PS 5,780,171 offenbart eine NiCoCrAl-Schicht mit Hafnium und Yttrium, wobei beim Herstellen der Schicht Stickstoff als Trägergas verwendet wird.

Die US-PS 5,652,028 offenbart eine NiCoCrAlY-Schicht.

Die WO 99/23270 offenbart eine NiCoCrAl-Schicht der Lanthan und Hafnium zugesetzt ist.

Die GB 2 243 161 A offenbart eine NiCoCrAl-Schicht mit Zusätzen von Zirkonium, Silizium, Tantal, Hafnium, Yttrium, Scandium oder Lanthan.

Die US-PS 5,141,821 offenbart eine NiCoCrAl-Schicht, mit eingeschlossenen Partikeln von Karbiden, um das Abrasivverhalten der Schicht zu verbessern. Die NiCoCrAl-Schicht kann weiterhin Zirkonium, Hafnium und Tantal enthalten.

Die EP 0 532 150 A1 beschreibt eine Schicht mit folgenden Elementen (in wt%): 5-10 Co, 8-12 Cr, 5-7 Al, 0-2 Ti, 1-3 Mo, 2-6 Ta, 2-4 W, 0-4 Re, 0-1 Hf, 0-1 Y, 0-1 Nb, 0-0, 07 C, 0-0,03 B, 0-0,03 Zr, Rest Ni. Zudem ist eine NiCoCrAlY-Schicht beschrieben.

Die DE 28 26 909 A1 beschreibt eine Schicht mit folgenden Elementen (in wt%): 8-30 Al, 10-50 Cr, 0-3 Y, Rest mindestens eines der Elemente Fe, Co oder Ni

Es ist daher Aufgabe der Erfindung eine NiCoCrAl- oder CoCrAl-Schicht aufzuzeigen, bei der ein Abplatzen der Aluminiumoxidschicht nicht stattfindet oder nur noch in geringem Maße.

Die Aufgabe wird durch eine NiCoCrAl- oder CoCrAl-Schicht gemäss den Patentanspruch 1 gelöst.

In den Unteransprüchen sind weitere vorteilhafte Ausgestaltungen einer NiCoCrAl- oder CoCrAl-Schicht aufgelistet.

Der Erfindung liegt die Erkenntnis zugrunde, dass eine gute Haftung der TGO auf der NiCoCrAl-Schicht positiv durch eine Mikroporosität der TGO beeinflusst wird.
Dabei sollten die in der TGO vorliegenden Poren einen Durchmesser von 10 bis 500 nm aufweisen. Die Porenabstände betragen dabei 30 bis 600 nm, wobei der Porenabstand mit zunehmender Porengröße zunimmt.
Die positive Wirkung der Mikroporosität beruht auf der Tatsache, dass die beim Abkühlen auftretenden thermischen Spannungen durch Dehnungen, die in der Aluminiumoxidschicht im Mikrobereich auftreten, abgebaut werden können. In hochdichten TGO's ist dies nicht möglich, da bereits geringste Dehnungen zum katastrophalen Risswachstum und somit zum Abplatzen der TGO führen.

Mikroporöse TGO's sind somit dehnungstoleranter und besser geeignet zum Abbau von thermisch induzierten Spannungen als hochdichte TGO's.

Die erfindungsgemäß verwendete NiCoCrAl- oder CoCrAl-Schicht weist Konzentrationen der Hauptlegierungselemente entsprechend dem Stand der Technik auf:
10 bis 82 wt% Kobalt,
10 bis 35 wt% Chrom,
8 bis 14 wt% Aluminium,

Rest Nickel mit weiteren Legierungszusätzen.
Solche Legierungszusätze sind für diese Zusammensetzung Silizium (bis 2 wt%), Rhenium (0,3 bis 5 wt%) und Tantal (bis 8 wt%).

Auf diese Art und Weise erhält man auf der Oberfläche der NiCoCrAl- oder CoCrAl-Schicht die Ausbildung einer gewünschten dehnungstoleranten Aluminiumoxidschicht mit einer Mikroporosität.

## Patentansprüche

1. NiCoCrAl- oder CoCrAl-Schicht,
die aus den Legierungselementen besteht:
10 bis 82 wt% Kobalt,
10 bis 35 wt% Chrom,
8 bis 14 wt% Aluminium,
0,3 bis 5 wt% Rhenium
0 bis 8 wt% Tantal,
0 bis 2 wt% Silizium,
Rest Nickel.

2. NiCoCrAl- oder CoCrAl-Schicht nach Anspruch 1,
wobei eine Aluminiumoxidschicht auf der NiCoCrAl-Schicht angeordnet ist,
die mikroporös ausgebildet ist.

3. NiCoCrAl-oder CoCrAl-Schicht nach Anspruch 1 oder 2,
**dadurch gekennzeichnet, dass**
die Mikroporosität durch eine Wärmebehandlung und/oder Oxidation in einer sich bildenden Aluminiumoxidschicht erzeugt ist.

4. NiCoCrAl- oder CoCrAl-Schicht nach Anspruch 1 oder 2,
**dadurch gekenzeichnet,** dass
auf der NiCoCrAl- oder CoCrAl-Schicht eine keramische Wärmedämmschicht angeordnet ist.

## Claims

1. NiCoCrAl or CoCrAl layer which consists of the alloying elements:
10 to 82% by weight of cobalt,
10 to 35% by weight of chromium,
8 to 14% by weight of aluminum,
0.3 to 5% by weight of rhenium,
0 to 8% by weight of tantalum,
0 to 2% by weight of silicon,
remainder nickel.

2. NiCoCrAl or CoCrAl layer according to Claim 1, wherein an aluminum oxide layer is arranged on the NiCoCrAl layer, which the aluminum oxide layer is microporous in form.

3. NiCoCrAl or CoCrAl layer according to Claim 1 or 2, **characterized in that** the microporosity is produced by a heat treatment and/or oxidization in an aluminum oxide layer which is forming.

4. NiCoCrAl or CoCrAl layer according to Claim 1 or 2, **characterized in that** a ceramic thermal barrier coating is arranged on the NiCoCrAl or CoCrAl layer.

## Revendications

1. Couche en NiCoCrAl ou en CoCrAl,
qui est constituée des éléments d'alliage :
de 10 à 82% en poids de cobalt,
de 10 à 35% en poids de chrome,
de 8 à 14% en poids d'aluminium,
de 0,3 à 5% en poids de rhénium,
de 0 à 8% en poids de tantale,
de 0 à 2% en poids de silicium,
le reste étant du nickel.

2. Couche en NiCoCrAl ou en CoCrAl suivant la revendication 1,
dans laquelle est disposée, sur la couche en NiCoCrAl, une couche d'oxyde d'aluminium,
qui est microporeuse.

3. Couche en NiCoCrAl ou en CoCrAl suivant la revendication 1 ou 2,
**caractérisée en ce que** la microporosité est produite par un traitement thermique et par une oxydation dans une couche d'oxyde d'aluminium en formation.

4. Couche en NiCoCrAl ou en CoCrAl suivant la revendication 1 ou 2,
**caractérisée en ce qu'**une couche calorifuge en céramique est disposée sur la couche en NiCoCrAl ou en CoCrAl.
